Europäisches Patentamt

European Patent Office

Office européen des brevets

(11) Publication number: **0 482 372 A1**

# EUROPEAN PATENT APPLICATION

(21) Application number: **91116321.0**

(22) Date of filing: **25.09.91**

(51) Int. Cl.5: **B01J 3/06**, //B24D3/02

(30) Priority: **23.10.90 US 601970**

(43) Date of publication of application:
**29.04.92 Bulletin 92/18**

(84) Designated Contracting States:
**AT BE CH DE ES FR GB IT LI NL SE**

(71) Applicant: **GENERAL ELECTRIC COMPANY**
**1 River Road**
**Schenectady New York 12305(US)**

(72) Inventor: **Slutz, David Earl**
**2448 Sandstrom Drive**
**Columbus, Ohio 43235(US)**

(74) Representative: **Catherine, Alain**
**General Electric France Service de Propriété**
**Industrielle 18 Rue Horace Vernet**
**F-92136 Issy-Les-Moulineaux Cedex(FR)**

(54) Unsupported sintered cubic boron nitride/diamond conjoint compacts and their fabrication.

(57) The present invention is directed to sintered polycrystalline CBN/diamond conjoint compacts which are unsupported, fabricated in the substantial absence of catalyst/sintering aid material, and exhibit CBN crystal-to-crystal bonding. The absence of catalyst/sintering aid material should make these conjoint masses fully dense and thermally-stable.

The unsupported, sintered CBN/diamond conjoint compacts disclosed herein can be fabricated by subjecting a mixture of CBN or a CBN-forming material, and diamond particles in the substantial absence of catalyst/sintering aid material to HP/HT conditions for forming an unsupported sintered polycrystalline CBN compact characterized by CBN intercrystal bonding and containing diamond particles dispersed throughout the conjoint compact. Feed for forming the novel conjoint compacts includes PBN, monocrystalline and polycrystalline CBN, and boron-rich polycrystalline CBN.

## Background of the Invention

The present invention relates to cubic boron nitride (CBN) compacts made by a high pressure/high temperature (HP/HT) process and more particularly to such compacts which are studded with diamond particles.

The manufacture of CBN by an HP/HT process is known in the art and is typified by the process described in U.S. Pat. No. 2,947,617, a basic monocrystalline CBN case. U.S. Pat. No. 4,188,194 describes a process for making sintered polycyrstalline CBN compacts which utilizes pyrolytic hexagonal boron nitride (PBN) in the absence of any catalyst/sintering aid material. An improvement on such direct conversion process is disclosed in U.S. Pat. No. 4,289,503 wherein boric oxide is removed from the surface of the HBN powder before the conversion process proceeds. U.S. Pat. No. 4,673,414 resinters polycrystalline cubic boron nitride by sintering substantially catalyst-free boron-rich polycrystalline cubic boron nitride particles in the HP/HT process. The re-sintered CBN product optionally may be recovered as a compact.

A compact is a mass of abrasive particles bonded together in a self-bonded relationship (see U.S. Pats. Nos. 3,852,073 and 3,876,751); by means of a bonding medium (see U.S. Pats. Nos. 3,136,615, 3,233,988, 3,743,489, 3,767,371, and 3,918,931); or by means of a combination thereof. A composite compact is a compact bonded to a substrate material, such as cemented metal carbide. U.S. Pat. No. 3,918,219 teaches the catalytic conversion of hexagonal boron nitride (HBN) to CBN in contact with a carbide mass to form a composite CBN compact. Compacts or composite compacts may be used in blanks for cutting tools, drill bits, dressing tools, and wear parts (see U.S. Pats. Nos. 3,136,615 and 3,233,988).

U.S. Pat. No. 3,136,615 proposes to bond diamond particles, CBN particles, or mixtures thereof with a bonding medium consisting essentially of boron carbide. U.S. Pat. No. 3,735,321 proposes a thermistor by forming doped compacts of diamond, CBN, or mixtures thereof. Boron is a preferred dopant. U.S. Pat. No. 3,744,982 proposes compacts having electrical resistivity of less than 10 ohm-cm which are formed from mixtures formed from a first group which includes boron-alloyed diamond finds, beryllium-alloyed cubic boron nitride fines, and mixtures thereof, and a member of a second group selected from zirconium diboride, titanium diboride, and mixtures thereof. Conventional HP/HT conditions are employed. U.S. Pat. No. 3,767,371 (cited above) in Example 3 utilizes a mixture of CBN, diamond, and cemented tungsten carbide in the formation of a composite compact. Finally, U.S. Pat. No. 3,831,428 forms composite wire drawing die compacts wherein a mixture of CBN and diamond (as well as these ingredients alone) is proposed.

In the foregoing CBN/diamond conjoint masses, all of the foregoing citations are consonant in calling for the use of a catalyst/sintering aid being present during the compact formation. In fact, some of the data indicates that CBN intercrystal bonding is lacking even though aluminum or other sintering aid material is included. Also, supported compacts are the primary product proposed in each of these citations..

## Broad Statement of the Invention

The present invention is directed to sintered polycrystalline CBN/diamond conjoint compacts which are unsupported, fabricated in the substantial absence of catalyst/sintering aid material, and exhibit CBN crystal-to-crystal bonding. The absence of catalyst/sintering aid material should make these conjoint masses fully dense and thermally-stable.

The unsupported, sintered CBN/diamond conjoint compacts disclosed herein can be fabricated by subjecting a mixture of CBN or a CBN-forming material, and diamond particles in the substantial absence of catalyst/sintering aid material to HP/HT conditions for forming an unsupported sintered polycrystalline CBN compact characterized by CBN intercrystal bonding and containing diamond particles dispersed throughout the conjoint compact. Feed for forming the novel conjoint compacts includes PBN, monocrystalline and polycrystalline CBN, and boron-rich polycrystalline CBN.

Advantages of the present invention include the formation of compacts which should find use where normal polycrystalline diamond compacts (PDC) or CBN compacts would not be applicable. The lack of metallic sintering aid material should make the conjoint masses thermally stable at temperatures beyond conventional CBN or PDC products made with the aid of sintering aid material. A further advantage should be a conjoint compact which is more resistant to oxidation of the diamond particles by virtue of the CBN matrix in which they are embedded. Yet another advantage is a conjoint compact that should have increased abrasion resistance compared to conventional CBN compacts by virtue of the presence of the diamond particles therein. These and other advantages should be readily apparent to those skilled in the art based upon the disclosure contained herein.

## Detailed Description of the Invention

The mixture subjected to the HP/HT conditions includes CBN or a material that forms CBN under the HP/HP conditions used. Alternatively, a mixture of CBN and CBN-forming material may be utilized. With respect to CBN-forming materials, low pressure forms of BN powders (GBN) are known in the art as is the application of temperature and pressure sufficient to convert the low pressure phase BN to the cubic phase. The GBN reactant can range in size on up to 1.5 mm, though typical size ranges of GBN in commercial operations range from about 0.1 to 10 microns in particle size. It is important that no impurities which inhibit the transformation of GBN to CBN be included in the reaction mixture. Conventional handling and pre-processing of the GBN phase may be desirable, such as, for example, removal of boric oxide from the surface of HBN powder as taught in U.S. Pat. No. 4,289,503.

Alternatively, conventional CBN, monocrystalline and polycrystalline, can be utilized in he reaction mixture of the present invention. Processes for producing such CBN particles are well documented in the art set forth above.

Boron-rich polycrystalline CBN particles also may be used in forming the CBN/diamond mixture subjected to the HP/HT process of the present invention. One technique for preparation of the boron-rich polycrystalline CBN involves the high pressure/high temperature processing of mixtures of HBN powder and either elemental boron or various boron containing compounds (e.g. $AlB_{12}$) as described in British Pat. No. 1,513,990. Another process for making boron-rich polycrystalline CBN involves generating excess boron on the surface of oxide-free HBN prior to its conversion to CBN. The excess boron is generated by a pre-treatment which is carried out at a temperature in the hexagonal boron nitride thermal decomposition range by vacuum firing and heating under an inert atmosphere followed by conversion to CBN by high pressure/high temperature processing, as described in U.S. Pat. No. 4,289,503.

The diamond particles admixed with the CBN or CBN-forming material can range on up to about 170 microns in average particle size, though typically the diamond particles will range from about 4 to 75 microns in average particle size. The proportion of diamond particles present in the starting mixture can range from about 50 to 95 weight percent. Pretreatment of the diamond particles to remove sintering inhibiting impurities also can be practiced as is known in the art.

In practicing the present invention, the mixture is placed in a high pressure/high temperature apparatus, such as described in U.S. Pat. No. 4,289,503 and placed under pressure and then temperature for a time sufficient for sintering or resintering to occur. The sample then is allowed to cool under pressure as known in the art to inhibit reconversion or back-conversion of CBN to HBN, and finally the pressure is decreased to atmospheric pressure and the conjoint mass or compact recovered. As taught in the art, pressures in excess of 45 Kbars are appropriate and generally such pressures should range from about 45 to 80 Kbars. The temperature should be at least about 1500° C, but should be less than the CBN reconversion temperature. Preferably, the temperature should range from about 1500° to 2300° as is taught in the art. The time necessary for the sintering or resintering to occur necessarily depends upon the temperature and pressure combination chosen as is well known in the art.

The conjoint compact recovered from the reaction cell then is processed conventionally, e.g. cup removal and grinding operations. The product additionally may be cut to a particular configuration or mounted and then cut as is well known in the art.

In practicing the present invention, the mixture is placed in a high pressure/high temperature apparatus, such as described in U.S. Pat. No. 4,289,503 and placed under pressure and then temperature for a time sufficient for sintering or resintering to occur. The sample then is allowed to cool under pressure as known in the art to inhibit reconversion or back-converion of CBN to HBN, and finally the pressure is decreased to atmospheric pressure, and the conjoint mass or compact recovered. As taught in the art, pressures in excess of 45 Kbars are appropriate and generally such pressures should range from about 45 to 80 Kbars. The temperature should be at least 1500° C, but should be less than the CBN reconversion temperature. Preferably, the temperature should range from about 1500° to 2300° C as taught in the art. The time necessary for the sintering or resintering to occur necessarily depends upon the temperature and pressure combination chosen as is well known in the art.

The conjoint compact recovered from the reaction cell then is processed conventionally, e.g. cup removal and grinding operations. The product additionally may be cut to a particular configuration or mounted and then cut as is well known in the art.

Since the conjoint mass is made in the substantial absence of catalyst/sintering aid material, careful practice of the HP/HT process should result in extremely dense compacts. Additionally, thermal stability should be exhibited by the inventive conjoint compacts due to the absence of sintering aid material. Though not experimentally proven to date, it is reasonable to expect that a measure of oxidation protection should be imparted by the CBN matrix to the diamond particles. Moreover, the diamond particles should increase to hardness of the compacts enabling them to be used in applications including machining, drilling, and/or dressing.

The following example shows how the present invention has been practiced, but should not be construed as limiting. In this application, all percentages and proportions are by weight and all units are in the metric system, unless otherwise expressly indicated. Also, all citations referred to herein are expressly incorporated herein by reference.

EXAMPLE

A mixture of 75 micron diamond powder was mixed with micron-sized cubic boron nitride powder in a weight ratio of 4:1. The powder mixture was loaded into a tantalum cup without any catalyst materials. The powder then was subjected to heating at a temperature of about 1500°C and a pressure of about 60 Kbar for about 10 minutes. The resulting composite material was a mass of diamond particles surrounded by a matrix of CBN. The X-ray diffraction pattern revealed a two-phase system of diamond and CBN. Photomicrographs reveal large diamond particles surrounded by a matrix of CBN. The Auger elemental dot matrix clearly shows the large particles to be carbon while the matrix material is made up of boron and nitrogen. A kerosene infiltration porosity measurement was done and the porosity of the composite was about 0.8%.

**Claims**

1. A method for forming a sintered polycrystalline cubic boron nitride (CBN)/diamond conjoint compact which comprises:
   subjecting a mixture of CBN or a CBN-forming material, and diamond particles in the substantial absence of catalyst/sintering aid material to HP/HT conditions for forming an unsupported sintered polycrystalline CBN compact characterized by CBN crystal-to-crystal bonding and containing diamond particles dispersed throughout the conjoint compact.

2. The method of claim 1 wherein said mixture includes graphitic boron nitride.

3. The method of claim 1 wherein said CBN or CBN-forming material ranges in particle size up to about 1.5 mm.

4. The method of claim 1 wherein said CBN or CBN-forming material ranges in size from about 0.1 to 10 microns.

5. The method of claim 1 wherein the proportion of diamond in said mixture is between about 50 and 95 wt-%.

6. The method of claim 5 wherein the proportion of diamond in said mixture ranges from between about 75 and 85%.

7. The method of claim 1 wherein the diamond particles range in size from between about 1 and 170 microns.

8. The method of claim 7 wherein said diamond particles range in size from between about 4 and 75 microns.

9. The method of claim 1 wherein said HP/HT conditions include a pressure of greater than about 45 Kbars and a temperature in excess of about 1500°C but less than the CBN reconversion temperature.

10. The method of claim 9 wherein said pressure ranges from between about 45 to 80 Kbars and said temperature ranges from between about 1500° and 2300°C.

11. An unsupported, sintered cubic boron nitride (CBN)/diamond conjoint compact characterized by CBN crystal-to-crystal bonding and containing diamond particles dispersed throughout, said compact being substantially devoid of catalyst/sintering aid material.

European
Patent Office

EUROPEAN SEARCH
REPORT

Application Number

EP 91 11 6321

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 852 078   (M.WAKATSUKI ET AL.) <br> * abstract * <br> * column 2, line 29 - line 61 * <br> * column 3, line 24 - line 60 * <br> * column 4, line 6 - line 46 * <br> * examples 4-7 * <br> * claims 1,4,6,9,11,12 * * | 1-11 | B 01 J 3/06 // <br> B 24 D 3/02 |
| X | LU-A-60 741   (MEGADIAMOND CORPORATION) <br> * page 1, paragraph 1 * <br> * page 2, paragraph 6 - page 3, paragraph 1 * <br> * page 8; example 3 * <br> * claims 1-4,6-9 * * | 1,5,7, 9-11 | |
| A,P | PATENT ABSTRACTS OF JAPAN vol. 015, no. 248 (C-084)25 June 1991 <br> & JP-A-03 080 155 ( TOYOTA CENTRAL RESEARCH & DEVELOPMENT LABORATORY ) 4 April 1991 applic.date: 18-08-1989 <br> * abstract * * | 1,2,5,9 | |

TECHNICAL FIELDS
SEARCHED (Int. Cl.5)

B 01 J

The present search report has been drawn up for all claims

| Place of search | Date of completion of search | Examiner |
|---|---|---|
| The Hague | 06 February 92 | SIEM T.D. |